# FASCICULE DE BREVET EUROPEEN

(11) **EP 3 271 075 B1**
(45) Date de publication et mention de la délivrance du brevet: **15.09.2021**
(21) Numéro de dépôt: 16721856.9
(22) Date de dépôt: 18.03.2016
(51) Int. Cl.: B01L 3/02, B01L 3/00, G01N 1/28

(54) **DISPOSITIF DE PREPARATION D'UNE COUCHE DE CELLULES BIOLOGIQUES SUR UNE LAME ET APPAREIL DE PREPARATION AUTOMATIQUE D'UNE COUCHE DE CELLULES UTILISANT LEDIT DISPOSITIF**
VORRICHTUNG ZUR HERSTELLUNG EINER SCHICHT VON BIOLOGISCHEN ZELLEN AUF EINEM OBJEKTTRÄGER UND VORRICHTUNG ZUR AUTOMATISCHEN HERSTELLUNG EINER SCHICHT VON ZELLEN MIT DIESER VORRICHTUNG
DEVICE FOR PREPARING A LAYER OF BIOLOGICAL CELLS ON A SLIDE AND APPARATUS FOR AUTOMATICALLY PREPARING A LAYER OF CELLS USING SAID DEVICE

(30) Priorité: 18.03.2015 FR 1552214
(43) Date de publication de la demande: 24.01.2018
(73) Titulaire: R.A.L. Diagnostics, 33650 Martillac (FR)
(72) Inventeur: LE COMTE, Roger, Lucien, Marie, 34470 Perols (FR)
(74) Mandataire: Aquinov
(86) Numéro de dépôt international: PCT/FR2016/050604
(87) Numéro de publication internationale: WO 2016/146957

(56) Documents cités:
- WO-A1-2010/036352
- US-A- 2 982 987
- US-A- 5 494 828
- US-A- 5 714 124
- US-A- 5 801 062
- US-A1- 2015 056 695
- US-B1- 6 939 514

## Description

La présente invention concerne un dispositif de préparation d'une couche de cellules biologiques à partir d'une goutte de liquide biologique sur une lame de microscope. La présente invention concerne également un appareil de préparation automatique d'une couche de cellules biologiques utilisant un tel dispositif.

Dans le cadre de l'invention, le terme "liquide biologique" désigne tout liquide naturel ou préparation biologique contenant des cellules, tel que le sang, la moelle osseuse, et le terme "cellule" signifie tout aussi bien une cellule dans son sens le plus classique, tels les globules rouges, les globules blancs et les plaquettes, que tout autre type cellulaire présent dans un liquide biologique.

Il est bien connu de réaliser une couche avec un liquide biologique sur une lame, pour soumettre ensuite ce liquide à un examen au microscope. Cette technique permet, par exemple avec le sang, d'observer et d'identifier les cellules. La qualité de la couche est importante, par exemple pour les analyseurs différentiels automatiques des cellules sanguines dont la précision peut être affectée si la couche n'est pas uniforme et fine. Une telle couche de cellules sanguines est connue également sous le nom de frottis sanguin.

La réalisation d'un frottis sanguin est souvent une opération manuelle qui consiste à prélever un peu de sang à l'intérieur d'un tube puis d'en déposer une goutte dont le volume est d'environ 5 mm³ sur une première lame de verre posée horizontalement sur un plan. En suivant, on place une deuxième lame inclinée à environ 30° et on la fait glisser jusqu'à ce qu'un bord entre en contact avec la goutte. La goutte de sang s'étale le long de l'arête par capillarité. On fait glisser la lame inclinée pour étaler le sang sur la surface de la première lame, afin de former une fine couche de cellules sanguines composée de globules rouges, globules blancs et de plaquettes. La couche de cellules sanguines est ensuite séchée, puis colorée par au moins un réactif approprié pour permettre une analyse ultérieure des cellules au microscope. Cette analyse permet notamment de déterminer la composition de l'échantillon sanguin considéré, ce qui est primordial pour le diagnostic de certaines pathologies.

Un tel frottis sanguin va ainsi comporter une zone de cellules disposées en monocouche, sur laquelle l'examen microscopique va se focaliser, Plus la zone monocouche sera étendue, plus il sera possible d'examiner de cellules et ainsi, plus l'examen microscopique sera qualitatif.

Une telle préparation manuelle d'étalement sanguin pose différents problèmes notamment en ce qui concerne l'étalement sanguin qui doit être parfaitement maîtrisé afin d'obtenir une répartition uniforme des cellules sur la lame, et cela quelle que soit la quantité de cellules présentes dans le sang. Ainsi, une telle opération nécessite souvent un technicien de laboratoire ou biologiste bien formé pour pouvoir réaliser un frottis de qualité, c'est-à-dire une couche de cellules homogène, ni trop mince ni trop épaisse, avec des cellules non superposées, De plus, la reproductibilité est importante.

Une telle opération manuelle présente également un risque de contact avec le sang pour l'opérateur.

Un autre problème est lié à la manipulation des lames qui sont en verre, relativement fragiles.

Pour simplifier les étapes de prélèvement du sang et de la formation d'une goutte sur une lame et afin de diminuer le risque de contamination de l'opérateur par le sang, les documents US 5 714 124 et US 5 163 583 décrivent un dispositif de prélèvement et de distribution de gouttes de sang sur une lame comprenant un canal de passage, une extrémité dudit canal étant munie d'un moyen de perçage pour percer le bouchon d'un tube de sang et l'extrémité opposée formant une pointe de distribution pour déposer la goutte. L'opération de perçage est faite manuellement par l'opérateur sur un tube de sang positionné verticalement et avec le bouchon en position supérieure. Le tube est ensuite retourné. Pour déposer la goutte, l'opérateur doit appliquer une pression sur le tube. Le dispositif comporte une butée qui vient en appui sur le bouchon. Celui-ci, réalisé en matière souple, se déforme et met l'intérieur du tube de sang sous pression, forçant le sang à sortir du tube pour former une goutte sur l'extrémité de sortie du tube. L'opérateur arrête la pression lorsque la goutte, devenue assez grosse, tombe sur la surface de dépose de la lame.

Même si un tel dispositif permet de faciliter le prélèvement de sang, il est difficile de contrôler la formation de la goutte de sang.

Pour tenter de remédier à cette problématique de contrôle de formation de la goutte de sang, les documents US 5 344 666, US 5 697 522 et US 2013/0228596 décrivent un dispositif de prélèvement et de distribution d'une goutte de sang sur une lame de microscope comprenant un corps de distribution comprenant un canal, une extrémité comprenant un moyen de perçage et l'extrémité opposée comprenant une pointe de distribution et des surfaces d'appui. L'opérateur introduit le moyen de perçage dans le bouchon du tube de sang et retourne l'ensemble afin de mettre en contact les surfaces d'appui avec la surface de dépose de la lame. L'opérateur applique une force sur le tube par rapport à la surface de dépose afin de faire sortir une goutte de sang de la pointe de distribution. La quantité de sang distribué est déterminée par la distance séparant la pointe de distribution et le plan délimité par les surfaces d'appui.

Le document US 5 801 062 décrit également un dispositif de prélèvement de sang comprenant un canal, une extrémité du canal comprenant une aiguille pour prélever le sang dans un récipient et l'extrémité opposée comprenant une pointe de distribution pour déposer une goutte de sang sur une lame et un moyen d'étalement servant à étaler la goutte de sang. Toutefois ce moyen d'étalement se présente sous la forme d'une lame reliée rigidement à une paroi périphérique de la pointe de distribution et disposée perpendiculairement à la paroi. Ainsi, une fois la goutte de sang déposée, l'opérateur doit positionner le dispositif horizontalement de manière à pouvoir utiliser la lame pour étaler le sang. Ainsi l'étalement est effectué manuellement par l'opérateur et il n'est pas possible de contrôler la qualité de l'étalement, notamment l'uniformité de la couche.

Selon un autre inconvénient important, dans tous ces dispositifs antérieurs, l'opérateur doit extraire le dispositif de distribution manuellement, ce qui ne permet pas de limiter le risque de contamination pour l'utilisateur. De plus, le moyen de perçage est formé généralement par une aiguille métallique, ce qui présente un risque important pour l'opérateur.

Le document US 4 151 915 propose un appareil qui permet d'automatiser l'étalement de la goutte de sang. Toutefois cet appareil est dépourvu de moyens qui permettent de prélever le sang et de déposer une goutte sur une lame. Un opérateur doit réaliser ses étapes préalablement à la phase d'étalement réalisée par l'appareil.

Le document US 2015/056695 décrit un dispositif d'étalement manuel d'une goutte d'un liquide biologique sur une lame à l'aide d'un racleur.

Aussi, la présente invention vise à remédier aux inconvénients de l'art antérieur en proposant un dispositif qui permet de déposer avec précision une goutte de liquide et de contrôler l'étalement de la goutte. La présente invention propose également un appareil qui permet une automatisation de toutes les étapes d'une préparation de frottis sanguin.

A cet effet, la présente invention a pour objet un dispositif de préparation d'une couche de cellules biologiques sur une surface de dépose d'une lame, ledit dispositif comprenant un corps muni d'un canal, ledit corps comprenant une première extrémité formant une pointe d'entrée destinée à pénétrer à l'intérieur d'un récipient contenant un liquide biologique, fermé par un bouchon et une seconde extrémité formant une pointe de de dépôt destinée à déposer une goutte dudit liquide biologique sur la surface de dépose, ladite seconde extrémité comprenant des moyens d'appui destinés à venir en appui contre la surface de dépose et un moyen d'étalement pour étaler la goutte de liquide pour former la couche de cellules biologiques, ledit moyen d'étalement comprenant une lamelle disposée dans un plan formant un angle d'inclinaison α avec un plan de la surface de dépose et des moyens élastiques de rappel interposés entre ladite lamelle et ladite seconde extrémité, ledit dispositif étant caractérisé en ce que ledit moyen d'étalement comprend une lamelle ayant une forme sensiblement rectangulaire, ladite lamelle comprenant un premier bord relié à la seconde extrémité par les moyens élastiques de rappel et un second bord qui dépasse un plan délimité par les moyens d'appui d'une distance h₂, la distance h₂ et les moyens élastiques de rappel coopérant ensemble de façon à garantir un étalement contrôlé de la goutte de liquide biologique pour former la couche de cellules biologiques et en ce que lesdits moyens d'appui comprennent une jupe entourant partiellement la pointe de dépôt et munie d'une fenêtre .

La présente invention concerne également un appareil de préparation automatique d'une couche de cellules biologiques utilisant le dispositif de préparation défini ci-dessus, ledit appareil étant caractérisé en ce qu'il comprend:
- une unité de support destinée à recevoir une lame comprenant une surface de dépose;
- une unité de préparation comprenant des moyens de mise en œuvre du dispositif de préparation pour prélever une goutte de liquide biologique à partir d'un récipient contenant un liquide biologique et étaler de manière contrôlée ladite goutte de liquide biologique pour réaliser une couche fine de cellules biologiques ;

- des moyens de contrôle de présence de la goutte de liquide sur la surface de dépose et
- des moyens d'extraction du dispositif de distribution.

La présente invention concerne également un procédé mettant en œuvre un tel appareil de préparation automatique d'une couche de cellules biologiques, ledit procédé comprend les étapes suivantes :
- mettre en place une lame sur l'unité de support, ladite lame comprenant une surface de dépose orientée vers le haut ;
- fixer un récipient contenant un liquide biologique sur le support de fixation avec le bouchon du récipient orienté vers le haut ;
- mettre en place le dispositif de préparation dans l'ouverture avec la pointe d'entrée orientée vers le bouchon;
- déplacer ledit récipient verticalement en direction du dispositif de préparation afin d'introduire la pointe d'entrée dans le récipient ;
- placer ledit récipient et ledit dispositif de préparation afin que la pointe de dépôt soit orientée vers la surface de dépose de la lame ;
- déplacer ledit récipient verticalement en direction de la surface de dépose de la lame de manière à mettre en contact les moyens d'appui contre la surface de dépose et à appliquer le bouchon contre la surface d'appui, comprimant ainsi l'intérieur du récipient afin de faire sortir une goutte de liquide biologique au niveau de la pointe de dépôt, ladite goutte étant séparée de la pointe de dépôt sous l'effet de la tension superficielle et déposée sur la surface de dépose ;
- déplacer la lame selon une direction horizontale pour réaliser un déplacement relatif entre le moyen d'étalement et la surface de dépose afin d'étaler de manière contrôlée la goutte de liquide biologique pour réaliser une couche fine de cellules biologiques.

Selon une forme avantageuse de réalisation, le procédé comprend une étape supplémentaire visant à détecter la présence de la goutte de liquide biologique par les moyens de contrôle de présence avant de déplacer la lame pour étaler la goutte.

De préférence, le procédé comprend une étape supplémentaire visant à agiter le récipient pour homogénéiser le liquide biologique avant de déposer la goutte sur la surface de dépose de la lame.

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue schématique en perspective d'un dispositif de préparation d'une couche de cellules biologiques selon l'invention ;
- la figure 2A est une vue schématique de profil du dispositif de la figure 1 ;
- la figure 2B est une coupe de la figure 2A selon un axe AA ;
- la figure 3 est une vue du dispositif de la figure 2B illustrant un tube de sang mis en position sur le dispositif lors de la formation d'une goutte de sang sur la surface de dépose d'une lame ;
- les figures 4A-4C sont des vues montrant la pointe de dépôt du dispositif de la figure 3 à différentes étapes de la préparation d'un frottis sanguin ;
- la figure 5A est une vue schématique de profil d'une variante du dispositif de la figure 3 et la figure 5B est une vue de dessus de la figure 5A ;
- les figures 6A-6H sont des vues schématiques en perspective d'un appareil de préparation automatique utilisant le dispositif de préparation des figures précédentes à différentes étapes de la préparation d'un frottis sanguin.

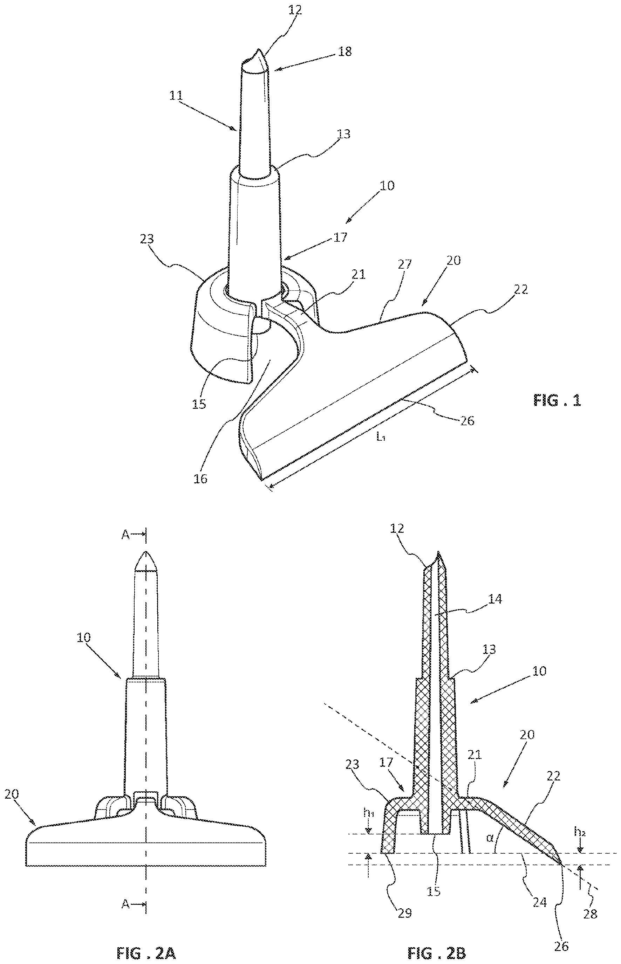

Sur les figures 1 et 2, on a représenté un dispositif 10 pour préparer une couche de cellules biologiques selon l'invention. Ce dispositif 10 est particulièrement adapté pour préparer une couche de cellules sanguines.

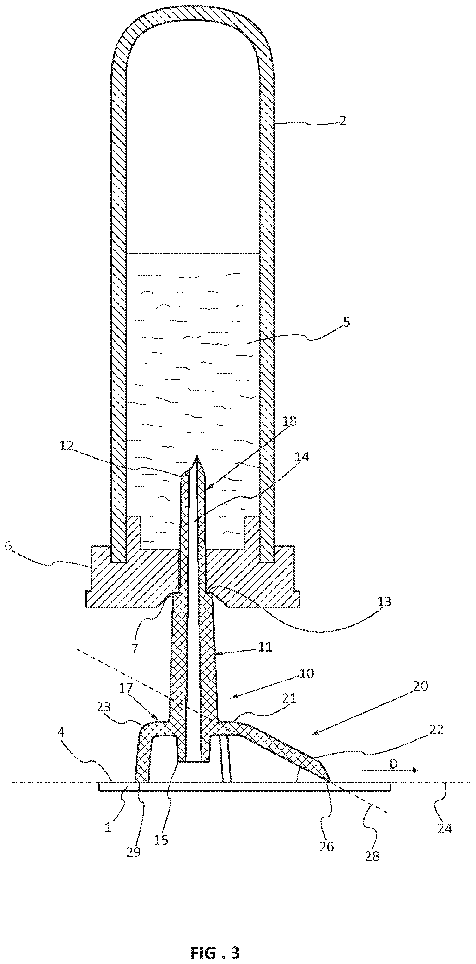

De manière conventionnelle et comme l'illustre la figure 3, le liquide biologique 5 ou le sang est contenu dans un récipient 2 fermé par un bouchon 6. Le récipient est généralement un tube 2 et le bouchon 6 est en matériau souple du type élastomère.

Le dispositif 10 comprend un corps 11 qui s'étend selon une direction verticale.

Pour la suite de la description, une direction verticale est parallèle à la force gravitationnelle G et le sens haut-bas correspond au sens de la force gravitationnelle G.

Le corps 11 est muni d'une voie de passage formée par un canal 14 qui s'étend entre une première extrémité 18 et une seconde extrémité 17.

La première extrémité 18 forme une pointe d'entrée 12 destinée à pénétrer à l'intérieur du tube de sang 2.

Selon une forme préférée, la pointe d'entrée 12 est configurée pour former un moyen de perçage. Comme dans l'exemple illustré sur les figures 1 à 3, le moyen de perçage est formé par une extrémité biseautée destinée à venir percer le bouchon 6.

Selon une forme de réalisation, le corps 11 comprend en outre une surface d'appui 13 destinée à venir en appui contre une zone 7 du bouchon 6 du récipient afin de comprimer l'intérieur du récipient lorsque, une fois la pointe d'entrée 12 introduite à travers le bouchon, on exerce une pression sur ledit bouchon 6. Cette surface d'appui 13 permet de définir la longueur du corps 11 pénétré dans le tube 2 et forme une butée.

Selon une forme de réalisation, cette surface d'appui 13 est formée par un épaulement annulaire 13 formé sur la paroi extérieure du corps 11.

La seconde extrémité 17 forme une pointe de dépôt 15 destinée à venir déposer une goutte de liquide 3 sur la surface de dépose 4 d'une lame de microscope qui est généralement en verre.

Selon une caractéristique importante de l'invention illustrée sur la figure 2B et la figure 3, la seconde extrémité 17 comprend en outre un moyen d'étalement 20 pour étaler la goutte de liquide 3 pour former la couche de cellules biologiques. Ce moyen d'étalement 20 comprend une lamelle d'étalement 22 disposée dans un plan 28 qui forme un angle d'inclinaison α avec un plan 24 de la surface de dépose 4 et des moyens élastiques de rappel 21 interposés entre la lamelle d'étalement 22 et la seconde extrémité 17.

Pour la suite de la description, on désignera la lamelle d'étalement 22 par le terme "lamelle".

Selon une forme particulièrement avantageuse de l'invention, ledit moyen d'étalement 20 comprend une lamelle 22 ayant une forme sensiblement rectangulaire. Cette lamelle comprend un premier bord 27 supérieur, relié à la seconde extrémité 17 par les moyens élastiques de rappel 21 et un second bord 26 inférieur destiné à venir en contact avec la surface de dépose 4.

De préférence, la largeur de la lamelle 22 L₁ correspond à la dimension du frottis sanguin et est inférieure à la dimension de la lame 1.

De préférence, la forme du deuxième bord 26 inférieur est configurée pour être adaptée au profil de la surface de dépose 4 de la lame 1.

En outre, les moyens élastiques de rappel 21 permettent de régler l'angle d'inclinaison α pour permettre l'ajustement de l'épaisseur de l'étalement. De préférence, cet angle d'inclinaison est compris entre 25° et 35°.

De préférence, les moyens élastiques de rappel 21 se présentent sous la forme d'une zone de liaison réalisée dans un matériau élastique.

Selon une forme de réalisation illustrée sur la figure 2B, le dispositif de l'invention comprend en outre des moyens d'appui 23 destinés à venir en appui contre la surface de dépose 4 lorsque l'on place le dispositif 10 en contact avec la surface de dépose 4 de la lame de manière à espacer la pointe de dépôt 15 d'une distance h₁ définie par rapport à la surface de dépose 4. Ainsi la pointe de dépôt 15 est espacée d'un plan 24 délimité par les bords inférieurs 29 des moyens d'appui d'une distance h₁. Cette distance permet de déterminer la quantité de liquide biologique à déposer sur la surface de dépose 4. Lorsque le dispositif 10 est placé en contact avec la surface de dépose 4 pour déposer la goutte, le plan 24 délimité par les moyens d'appui 23 est confondu avec le plan formé par la surface de dépose 4.

Selon une forme de réalisation, les moyens d'appui 23 se présentent sous la forme d'une jupe entourant partiellement la pointe d'entrée 15, laissant une fenêtre 16.

Selon une forme de réalisation, les moyens d'appui 23 et le moyen d'étalement 20 sont agencés par rapport à la pointe de dépôt 15 de manière à éviter tout contact avec la goutte de liquide 3 lorsqu'elle est déposée par la pointe de distribution 15. Le diamètre de la jupe doit donc être suffisant en fonction de la nature du liquide.

De fait, le second bord 26 inférieur de la lamelle 22 dépasse en dessous du plan 24 délimité par ces moyens d'appui 23 d'une distance h₂ comme l'illustre la figure 2B, la distance h₂ et les moyens élastiques de rappel 21 coopérant ensemble de façon à garantir un étalement contrôlé de la goutte de liquide biologique pour former la couche fine de cellules biologiques, comme expliqué ci-après.

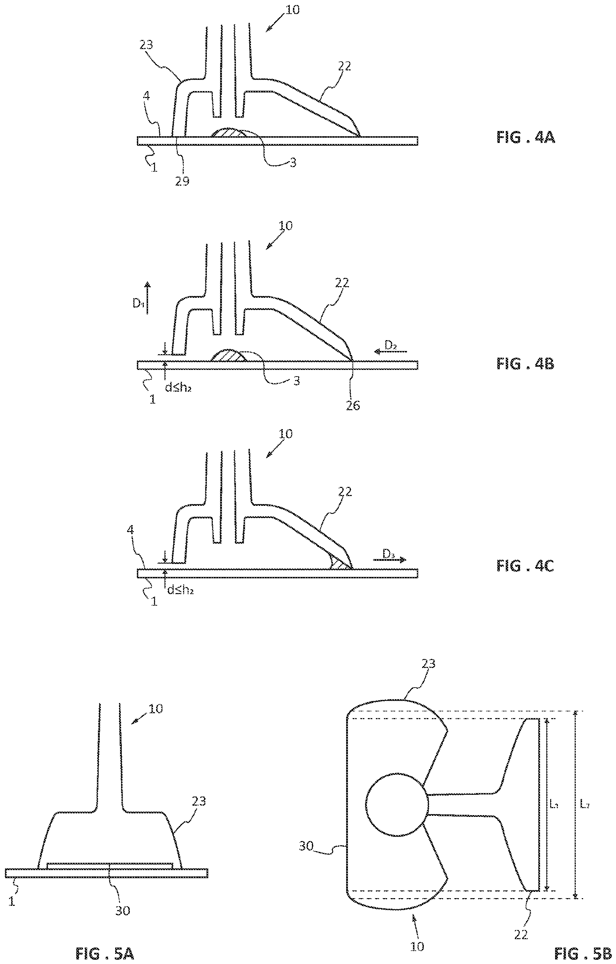

Le fonctionnement manuel du dispositif 10 est le suivant et illustré sur la figure 3 et les figures 4A à 4C.

Le dispositif 10 est introduit à travers le bouchon 6 par sa pointe d'entrée 12 jusqu'à ce que la surface d'appui 13 vienne au contact dudit bouchon 6. Selon une forme préférée de l'invention, une cavité creuse 7 est aménagée au centre du bouchon, la surface d'appui 13 étant reçue dans cette cavité. La pointe d'entrée 12 se trouve dans le tube 2.

Le tube muni du dispositif selon la présente invention est retourné, les moyens d'appui 23 viennent en contact avec la surface de dépose 4. Le tube de sang 2 est orienté verticalement avec le bouchon 6 orienté vers le bas.

La longueur du corps du dispositif qui peut pénétrer dans le tube est limitée par la surface d'appui 13 qui vient en appui contre le fond de la cavité 7.

Afin de faire sortir une goutte de liquide au niveau de la pointe de dépôt 15, il faut appliquer une force verticale sur le tube 2, force qui se transmet contre la surface de dépose 4 par l'intermédiaire des bords inférieurs 29 de la jupe 23 de sorte que la surface d'appui 13 vient en appui contre le bouchon 6, le déforme et met en pression l'intérieur du tube 2. Comme le liquide 5 est sous pression dans ledit tube 2, une goutte de liquide se forme alors au niveau de la pointe de dépôt 15, en grossissant elle touche la surface de dépose 4, provoquant par les forces de capillarité une séparation de la goutte de sa pointe de dépôt 15 qui l'a générée.

La force appliquée sur le tube est alors relâchée et aucune autre goutte n'est générée. Comme l'illustre la figure 4A, les bords inférieurs 29 de la jupe des moyens d'appui 23 restent au contact de la surface de dépose 4. Parallèlement, la lamelle 22 est en appui également sur la surface de dépose 4.

Pour réaliser une couche fine de cellules sanguines ou un frottis sanguin, le dispositif 10 est remonté, selon un axe parallèle à la force gravitationnelle G de sorte que les bords inférieurs 29 de la jupe 23 s'écartent de la surface de dépose 4 d'une distance sensiblement inférieure à h₂. Le déplacement est représenté par la flèche D₁ sur la figure 4B. Parallèlement, la lamelle 22 reste toujours légèrement en appui sur la surface de dépose 4. Le second bord 26 inférieur est donc légèrement pressé sur ladite surface de dépose 4 avec une pression donnée, constante et reproductible lié aux caractéristiques des moyens élastiques de rappel 21 dont le degré d'élasticité ne se limite pas à la hauteur h₂. En suivant, on réalise un déplacement du dispositif 10 par rapport à la lame 1 en direction de la goutte 3. Le déplacement est représenté par la flèche D₂ sur la figure 4B. Le second bord 26 du moyen d'étalement 20 vient en contact avec la goutte 3 qui s'étale immédiatement le long du second bord 26 par capillarité. La goutte est maintenue par capillarité entre le second bord 26 et la surface de dépose 4 de la lame 1. Enfin, on déplace le dispositif 10 dont le sens de déplacement est indiqué par la flèche D₃ de sorte que la lamelle 22 tire sur la goutte. On réalise alors un étalement de la goutte sur la largeur du second bord 26, le long de la lame 1. Pendant les différentes étapes, l'effort est adapté pour conserver uniquement le contact de la lamelle sur la surface de dépose 4 sans générer une seconde goutte.

L'épaisseur et la longueur de l'étalement sont alors définis par la pression exercée par les moyens élastiques de rappel 21, qui est constante puisque la lamelle est en appui glissant sur la surface de dépose 4.

Cette épaisseur d'étalement diminue à mesure que le sang maintenu par capillarité entre le second bord 26 et la surface de dépose 4 pendant le mouvement est utilisé. On obtient ainsi en fin de frottis une fine couche de cellules propice à l'observation microscopique.

Selon une nouvelle forme de réalisation du dispositif 10 illustrée sur les figures 5A et 5B, le bord inférieur 29 du moyen d'appui 23 comprend une ouverture 30 positionnée à l'opposé de la lamelle 22. La largeur L₂ de l'ouverture est sensiblement supérieure à la largeur L₁ du bord inférieur 26 de la lamelle 22. De cette façon, il n'est plus nécessaire de soulever le dispositif 10 de manière à former un espace entre les bords inférieurs 29 du moyen d'appui 23 et la surface de dépose 4 en vue du déplacement de la lamelle pour tirer sur la goutte, l'ouverture 30 forme un pont au-dessus du frottis sanguin.

Selon une forme de réalisation, le dispositif 10 peut être fait d'un matériau moulé, ce qui permet de réduire le coût de fabrication du dispositif.

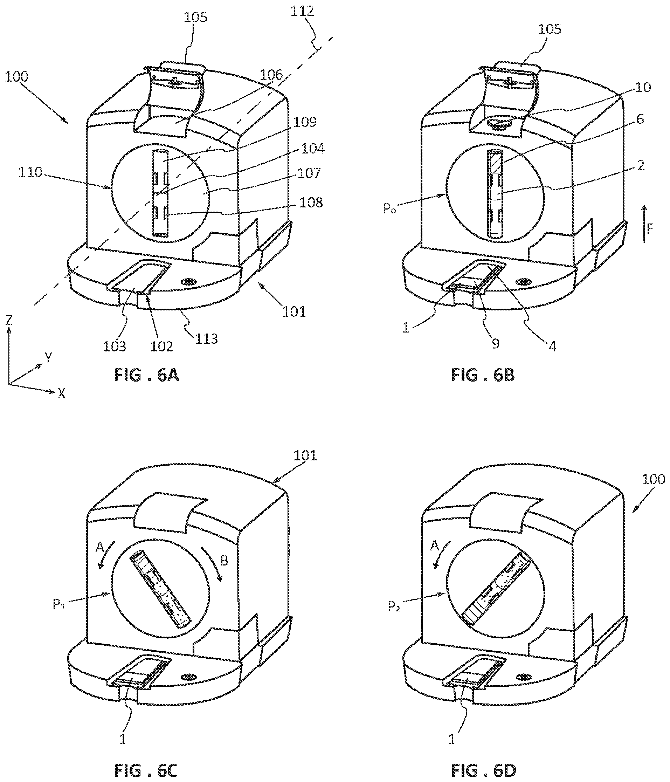

Sur les figures 6A à 6H, on a représenté un appareil de préparation automatique 100 d'une couche de cellules biologiques selon l'invention, utilisant le dispositif 10 qui vient d'être décrit.

Cet appareil comprend un bâti 101 comprenant une unité de préparation d'une couche de cellules biologiques 110 et une unité de support 102 de lame. L'unité de préparation 110 est équipée de moyens pour automatiser le fonctionnement du dispositif de préparation 10 qui est décrit ci-dessus en référence à la figure 3 et aux figures 4A-4C. Ce bâti comprend un repère X, Y, Z, l'axe Z étant orienté selon la direction verticale, le plan X, Y correspondant à un plan horizontal.

Pour la suite de la description de l'appareil, l'appareil est décrit dans le cadre d'une préparation d'une couche de cellules sanguines, appelée également frottis sanguin.

L'unité de support de lame 102 comprend un support horizontal 103 destiné à recevoir une lame 1. Cette lame est en verre sensiblement rectangulaire et comprend une surface de dépose 4 sur laquelle on prépare le frottis sanguin.

L'appareil comprend des moyens de déplacement en translation pour déplacer le support horizontal 103 selon une direction horizontale Y entre une position dans laquelle le support est entièrement accessible pour l'opérateur pour la mise en place ou l'enlèvement de la lame sur le support et une position dans laquelle la lame est positionnée dans l'unité de préparation 110 qui est prévue pour former une goutte de sang sur la lame 1 et pour étaler la goutte de sang pour former de manière contrôlée un frottis sanguin.

Le terme "contrôlée" désigne d'une part le volume contrôlé de la goutte de sang, et d'autre part l'épaisseur contrôlée du frottis sanguin.

Le dépôt de la goutte de sang s'effectue en un emplacement défini de la lame, le support étant immobilisé en translation. Le déplacement du support s'effectue par l'intermédiaire de moyens de déplacement en translation appropriés.

Comme on peut le voir sur la figure 6B, la lame 1 comporte une zone de préhension 9 de la lame pour l'opérateur et une zone réservée comprenant une surface de dépose 4 pour le frottis sanguin. Lorsque la lame est placée dans l'unité de préparation 110, seule la zone de préhension 9 est visible pour l'opérateur et l'emplacement défini de la goutte de sang est situé à proximité de la zone réservée.

L'unité de préparation 110 comprend un plateau 107 monté rotatif autour d'un axe 112 qui s'étend parallèlement à l'axe YY et un support de fixation 104 qui est destiné à recevoir le tube de sang 2. Le support de fixation 104 est agencé diamétralement par rapport au plateau 107. Le support de fixation 104 est d'une part mobile selon une direction verticale Z et d'autre part, porté par le plateau rotatif 107.

L'appareil comprend un moyen moteur adapté pour entraîner en rotation dans un sens ou dans l'autre le plateau 107 de manière séquentielle, en différentes positions. Ainsi le plateau peut se positionner à différentes positions angulaires.

Le support de fixation 104 du tube de sang a une forme tubulaire et est muni d'une ouverture latérale 109 qui s'étend selon la direction Z. Les deux bords en vis-à-vis de l'ouverture latérale sont munis de pattes de fixation 108 réalisées dans une matière élastique déformable. La dimension de cette ouverture axiale est inférieure à la dimension du tube 2. Pour la mise en place du tube sur le support de fixation, le tube est inséré par clipsage via l'ouverture axiale et est maintenu en position dans le support.

Lorsque le plateau est dans une position dite position initiale ou position de repos qui correspond à la position illustrée sur la figure 6A, le support de fixation 104 est dirigé verticalement selon l'axe Z. Lorsque le tube de sang est fixé sur le support de fixation 104 par clipsage comme l'illustre la figure 6B, le tube de sang 2 est agencé avec le bouchon 6 orienté vers le haut et le fond du tube orienté vers le bas. La fixation du tube 2 sur le support de fixation 104 est effectuée manuellement. Il n'y a là aucun risque pour l'opérateur.

Le bâti 101 comprend une ouverture 106 aménagée sur une surface frontale du bâti 101 et est configurée pour recevoir le dispositif de préparation d'un frottis sanguin désigné dans son ensemble par la référence 10 et illustré sur la figure 1.

Comme l'illustre la figure 6B, lorsque le dispositif de préparation 10 est mis en place dans l'ouverture 106, le dispositif est agencé verticalement, avec la pointe d'entrée 12 introduite dans le logement et orientée vers le bouchon du tube de sang et la pointe de dépôt 15 située à l'extérieure de l'ouverture et orientée vers le haut. La mise en place du dispositif de préparation 10 dans l'unité de préparation 110 est effectuée manuellement.

De préférence, l'ouverture 106 est fermée par une porte 105 qui a également pour fonction de maintenir en position verticale le dispositif de préparation 10 pendant toutes les étapes de préparation du frottis sanguin.

Le support de fixation 104 sur lequel est fixé le tube de sang 2 est mobile par rapport au plateau le long de l'axe vertical Z. L'appareil comprend un moyen moteur approprié pour entraîner le déplacement vertical du support 104. Le déplacement du support 104 qui est représenté par une flèche F sur la figure 6B permet de commander le déplacement du tube verticalement de manière ascendante en direction de la pointe d'entrée 12 du dispositif de préparation pour percer le bouchon 6. La pointe d'entrée 12 traverse alors le bouchon et est introduite dans le tube 2.

Avantageusement, la course du déplacement du tube est une course fixe « moyenne » pour correspondre à différents modèles de tube.

Selon une caractéristique particulièrement avantageuse de l'invention, l'appareil comprend des moyens d'agitation qui permettent d'homogénéiser le sang du tube avant la phase de dépôt de la goutte de sang sur la lame. Ces moyens d'agitation sont réalisés par la rotation du plateau 107 dont le principe est illustré sur les figures 6C et 6D.

Sur la figure 6B, lorsque le dispositif de préparation est associé au tube, ce dernier est dans une position verticale de référence P0 avec le bouchon 6 dirigé vers le haut. Pour réaliser l'agitation, le plateau effectue des mouvements de rotation partielle par un angle positif entre une position P1 (figure 6C) et une position P2 (figure 6D). Le sens de rotation du plateau est indiqué par la flèche A. Dans l'exemple illustré sur les figures, l'amplitude du mouvement de rotation peut être comprise entre 30° et 160°. Le nombre de rotations partielles entre les deux positions est compris entre 10 et 20 pour obtenir une agitation suffisante, ceci étant uniquement donné à titre indicatif.

Selon une variante, le mouvement de rotation peut également être effectué par un angle négatif B. Le sens de rotation est indiqué par la flèche B.

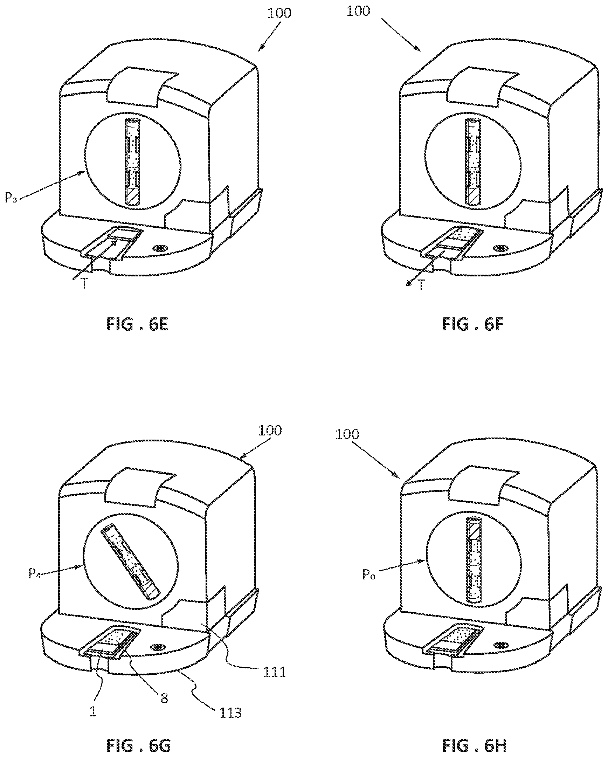

Lorsque la phase d'agitation est terminée, le tube est retourné de 180° par rapport à sa position de référence P0, dans une position verticale et orienté de sorte que la pointe de dépôt 15 du dispositif de préparation soit orientée vers le bas comme l'illustre la figure 6E.

En suivant, la lame 1 disposée sur le support de lame est translatée selon une direction T dans l'unité de préparation 110 de sorte que la pointe de dépôt 15 du dispositif de préparation soit orientée vers l'emplacement défini sur la surface de dépose de la lame.

Le tube 2 est déplacé dans une direction descendante de manière à mettre en contact les moyens d'appui 23 avec la surface de dépose 4. Le tube continue son déplacement afin d'appliquer le bouchon 6 contre la surface d'appui 13, comprimant ainsi le volume intérieur du tube afin de faire sortir une goutte de sang au niveau de la pointe de dépôt 15. La goutte de sang, lorsqu'elle entre en contact avec la surface de dépose, est entraînée par la tension superficielle qui se forme au niveau de la surface de dépose, et séparée de la pointe de dépôt.

Selon un mode de réalisation de l'invention, afin de contrôler si une goutte est bien déposée sur la surface de dépose de la lame, l'appareil comprend avantageusement des moyens de contrôle de présence de la goutte de sang déposée sur la lame.

Selon une forme de réalisation non illustrée sur les figures, ces moyens de contrôle comprennent un émetteur de lumière et un récepteur de lumière disposés face à la surface de la lame à l'emplacement de la goutte de sang. On déduit la présence de la goutte de sang à partir de la réflexion optique.

Selon une variante, l'émetteur et le récepteur sont disposés de part et d'autre de la lame à l'emplacement de la goutte de sang. Dans ce cas, on déduit la présence de la goutte de sang à partir de la transmission optique.

Ainsi lorsque le détecteur détecte la présence de la goutte sur la lame, la force appliquée sur le tube est arrêtée par un déplacement du tube vers le haut par l'intermédiaire du support de fixation 104 tout en conservant le contact des moyens d'appui 23 avec la surface de la lame 1. La lamelle 22 est en appui contre la surface de la lame 1.

Pour réaliser l'étalement de la goutte, le tube est déplacé vers le haut de sorte que les bords inférieurs 29 de la jupe 23 s'écartent de la surface de la lame d'une distance sensiblement inférieure à h₂. Dans cette configuration, la lamelle 22 du moyen d'étalement 20 reste en appui sur la surface de la lame. L'étalement est réalisé par un déplacement relatif entre le second bord 26 de la lamelle 22 et la surface de dépose 4 de la lame.

Dans le cas où l'appareil 100 utilise la variante du dispositif illustrée sur les figures 5A et 5B, le moyen d'appui 23 reste en contact avec la surface de dépose 4.

Selon l'invention, c'est le déplacement de la lame, par l'intermédiaire du support de lame, dans la direction horizontale YY qui provoque l'étalement (figure 6F). La lamelle 22 du moyen d'étalement reste fixe et en pression comme dans le cas de la manœuvre manuelle. Le mouvement de déplacement de la lame est représenté par la flèche T. Une fine couche de cellules sanguines 8 est alors formée sur la lame (figure 6G).

Avantageusement, ce déplacement de la lame dans la direction Y permet en même temps de placer la lame dans une position de sortie où elle est accessible pour l'opérateur (figure 6G).

Selon une forme particulièrement avantageuse, l'appareil comprend également des moyens d'extraction du dispositif de préparation par rapport au tube de sang à la fin du cycle de préparation d'un frottis. Le bâti comprend en outre un logement 111 de réception du dispositif usagé, située dans une embase 113 du bâti.

Selon une forme de réalisation telle qu'illustrée sur la figure 6G, les moyens d'extraction sont agencés dans une position qui fait un angle de 45 ° environ par rapport à l'axe XX. Lorsque la préparation du frottis sanguin est terminée, la seconde extrémité du dispositif est orientée vers le bas (Figure 6F). Pour extraire le dispositif de préparation 10, le plateau est entraîné en rotation de manière à placer la seconde extrémité en prise avec les moyens d'extraction. Dans cette position et comme l'illustre la figure 6G, le tube de sang fait un angle de 45° environ avec l'axe XX. Le plateau continue sa rotation de manière à placer le tube séparé du dispositif de préparation dans une position verticale (Figure 6H), prêt pour être sorti du logement.

Ainsi, la solution proposée par la présente invention permet d'automatiser l'ensemble des étapes pour former une couche de cellules biologiques, éliminant ainsi tout risque de contamination croisée d'un tube à l'autre et préservant l'opérateur de tout contact avec les liquides biologiques.

Cette automatisation permet de simplifier la réalisation du frottis sanguin.

En outre, la qualité du frottis ainsi réalisé n'est plus dépendante de l'habilité de l'opérateur. L'uniformité de la couche de cellules est réalisée de manière contrôlée et reproductible.

L'appareil est d'un encombrement limité, nécessite des moyens mécaniques d'un coût limité permettant à tout laboratoire de pouvoir s'équiper et donc d'améliorer la qualité.

Les moyens de détection de la présence d'une goutte de sang sur la surface de dépose permettent également un pilotage fiable de l'automatisme.

## Revendications

1. Dispositif de préparation d'une couche de cellules biologiques (10) sur une surface de dépose (4) d'une lame (1), ledit dispositif comprenant un corps (11) muni d'un canal (14), ledit corps comprenant une première extrémité (18) formant une pointe d'entrée (12) destinée à pénétrer à l'intérieur d'un récipient (2) contenant un liquide biologique (5), fermé par un bouchon (6) et une seconde extrémité (17) formant une pointe de dépôt (15) destinée à venir déposer une goutte dudit liquide biologique (3) sur la surface de dépose (4), ladite seconde extrémité (17) comprenant des moyens d'appui (23) destinés à venir en appui contre la surface de dépose (4) et un moyen d'étalement (20) pour étaler la goutte de liquide pour former la couche de cellules biologiques, ledit moyen d'étalement (20) comprenant une lamelle (22) disposée dans un plan (28) formant un angle d'inclinaison α avec un plan (24) de la surface de dépose (4) et des moyens élastiques de rappel (21) interposés entre ladite lamelle et ladite seconde extrémité (17), **caractérisé en ce que** ledit moyen d'étalement (20) comprend une lamelle (22) ayant une forme sensiblement rectangulaire, ladite lamelle comprenant un premier bord (27) relié à la seconde extrémité (17) par les moyens élastiques de rappel (21) et un second bord (26) qui dépasse un plan (24) délimité par les moyens d'appui (23) d'une distance h₂, la distance h₂ et les moyens élastiques de rappel (21) coopérant ensemble de façon à garantir un étalement contrôlé de la goutte de liquide biologique pour former la couche de cellules biologiques et **en ce que** lesdits moyens d'appui (23) comprennent une jupe entourant partiellement la pointe de dépôt (15) et munie d'une fenêtre (16).

2. Dispositif de préparation d'une couche de cellules biologiques (10) selon la revendication 1, **caractérisé en ce que** ladite pointe de dépôt (15) est espacée d'un plan (24) délimité par les moyens d'appui (23) d'une distance h₁ définie de façon à déterminer la quantité de liquide biologique à déposer sur la surface de dépose (4).

3. Dispositif de préparation d'une couche de cellules biologiques (10) selon l'une des revendications précédentes, **caractérisé en ce que** la forme du deuxième bord (26) est configurée pour être adaptée au profil de la surface de dépose (4).

4. Dispositif de préparation d'une couche de cellules biologiques (10) selon l'une des revendications précédentes, **caractérisé en ce que** le corps (11) comprend une surface d'appui (13) destinée à venir en appui contre une zone (7) du bouchon du récipient (6).

5. Dispositif de préparation d'une couche de cellules biologiques (10) selon l'une des revendications précédentes, **caractérisé en ce que** la pointe d'entrée (12) présente une extrémité biseautée destinée à venir percer le bouchon (6) dudit récipient.

6. Dispositif de préparation d'une couche de cellules biologiques (10) selon l'une des revendications précédentes, **caractérisé en ce que** lesdits moyens d'appui (23) et le moyen d'étalement (20) sont agencés par rapport à la pointe de dépôt (15) de manière à éviter tout contact avec la goutte de liquide (3) lorsqu'elle est déposée par la pointe de distribution (15) sur la surface de dépose (4).

7. Appareil de préparation automatique (100) d'une couche de cellules biologiques utilisant le dispositif de préparation (10) défini selon l'une des revendications 1 à 6, **caractérisé en ce que** ledit appareil comprend:
- une unité de support (102) destinée à recevoir une lame (1) comprenant une surface de dépose (4) ;
- une unité de préparation (110) comprenant des moyens de mise en œuvre du dispositif de préparation (10) pour prélever une goutte de liquide biologique à partir d'un récipient contenant un liquide biologique (2) et étaler de manière contrôlée ladite goutte pour réaliser une couche fine de cellules biologiques ;
- des moyens de contrôle de présence de la goutte de liquide biologique sur la surface de dépose (4) et
- des moyens d'extraction du dispositif de distribution.

8. Appareil de préparation automatique (100) d'une couche de cellules biologiques selon la revendication 7, **caractérisé en ce que** l'unité de préparation (110) comprend un support de fixation (104) destiné à recevoir le récipient (2), ledit support de fixation (104) étant d'une part déplaçable selon une direction verticale Z et d'autre part porté par un plateau (107) monté rotatif autour d'un axe (112).

9. Appareil de préparation automatique (100) d'une couche de cellules biologiques selon la revendication 6 ou 7, **caractérisé en ce que** les moyens de contrôle de présence de la goutte de sang comprennent un émetteur et un récepteur de lumière.

10. Appareil de préparation automatique (100) d'une couche de cellules biologiques selon l'une des revendications 6 à 9, **caractérisé en ce qu'**il comprend une ouverture (106) pour permettre l'introduction du dispositif (10).

11. Appareil de préparation automatique (100) d'une couche de cellules biologiques selon l'une des revendications 6 à 10, **caractérisé en ce qu'**il comprend des moyens de déplacement en translation selon une direction horizontale pour déplacer l'unité de support (102) entre une position de mise en place ou d'enlèvement de la lame (1) et une position dans laquelle la lame est placée dans l'unité de préparation (110).

12. Procédé de préparation d'une couche de cellules biologiques, notamment de cellules sanguines, mettant en œuvre un appareil de préparation (100) défini selon les revendications 7 à 11, **caractérisé en ce que** ledit procédé comprend les étapes suivantes :
- mettre en place une lame (1) sur l'unité de support (102), ladite lame comprenant une surface de dépose (4) orientée vers le haut ;
- fixer un récipient contenant un liquide biologique (2) sur le support de fixation (104) avec le bouchon (6) du récipient orienté vers le haut ;
- mettre en place le dispositif de préparation (10) dans l'ouverture (106) avec la pointe d'entrée (12) orientée vers le bouchon (6);
- déplacer ledit récipient (2) verticalement en direction du dispositif de préparation (10) afin d'introduire la pointe d'entrée (12) dans le récipient (2) ;
- placer ledit récipient (2) et ledit dispositif de préparation (10) afin que la pointe de dépôt (15) soit orientée vers la surface de dépose (4) de la lame ;
- déplacer ledit récipient (2) verticalement en direction de la surface de dépose (4) de la lame (1) de manière à mettre en contact les moyens d'appui (23) contre la surface de dépose (4) et à appliquer le bouchon (6) contre la surface d'appui (13), comprimant ainsi l'intérieur du récipient (2) afin de faire sortir une goutte (3) de liquide biologique au niveau de la pointe de dépôt (15), ladite goutte étant séparée de la pointe de dépôt (15) sous l'effet de la tension superficielle et déposée sur la surface de dépose (4) ;
- déplacer la lame selon une direction horizontale pour réaliser un déplacement relatif entre le moyen d'étalement (20) et la surface de dépose (4) afin d'étaler de manière contrôlée la goutte de liquide biologique pour réaliser une couche fine de cellules biologiques.

13. Procédé de préparation d'une couche de cellules biologiques selon la revendication 12, **caractérisé en ce que** le procédé comprend une étape supplémentaire visant à détecter la présence de la goutte de liquide biologique par les moyens de contrôle de présence avant de déplacer la lame pour étaler la goutte.

14. Procédé de préparation d'une couche de cellules biologiques selon la revendication 12 ou 13, **caractérisé en ce que** le procédé comprend une étape supplémentaire visant à agiter le récipient (2) pour homogénéiser le liquide biologique avant de déposer la goutte (3) sur la surface de dépose (4) de la lame.

## Patentansprüche

1. Vorrichtung zum Präparieren einer Schicht biologischer Zellen (10) auf einer Abgabefläche (4) eines Objektträgers (1), wobei die Vorrichtung einen mit einem Kanal (14) versehenen Körper (11) umfasst, wobei der Körper ein erstes Ende (18) umfasst, das eine Eintrittsspitze (12) zum Eindringen in das Innere eines eine biologische Flüssigkeit (5) enthaltenden Behälters (2) bildet, der durch einen Stopfen (6) verschlossen ist, und ein zweites Ende (17) umfasst, das eine zum Abgeben eines Tropfens der biologischen Flüssigkeit (3) auf die Abgabefläche (4) vorgesehene Abgabespitze (15) bildet, wobei das zweite Ende (17) zum Abstützen auf der Abgabefläche (4) vorgesehene Abstützmittel (23) und ein Verteilungsmittel (20) zum Verteilen des Tropfens Flüssigkeit, sodass er die Schicht aus biologischen Zellen bildet, umfasst, wobei das Verteilungsmittel (20) ein Deckglas (22), das in einer mit einer Ebene (24) der Abgabefläche (4) einen Neigungswinkel α bildenden Ebene (28) angeordnet ist, und zwischen dem Deckglas und dem zweite Ende (17) angeordnete elastische Rückstellmittel (21) umfasst, **dadurch gekennzeichnet, dass** das Verteilungsmittel (20) ein Deckglas (22) mit einer im Wesentlichen rechteckigen Form umfasst, wobei das Deckglas eine mit dem zweiten Ende (17) durch das elastische Rückstellmittel (21) verbundene erste Kante (27) und eine über eine durch die Abstützmittel (23) begrenzte Ebene (24) um einen Abstand h₂ hinausgehende zweite Kante (26) umfasst, wobei der Abstand h₂ und die elastischen Rückstellmittel (21) so zusammenwirken, dass zum Ausbilden der Schicht biologischer Zellen eine kontrollierte Verteilung des Tropfens biologischer Flüssigkeit sicher gestellt wird, und dadurch, dass die Abstützmittel (23) eine die Abgabespitze (15) teilweise umgebende und mit einem Fenster (16) versehene Schürze umfassen.

2. Vorrichtung zum Präparieren einer Schicht biologischer Zellen (10) nach Anspruch 1, **dadurch gekennzeichnet, dass** die Abgabespitze (15) von einer durch die Abstützmittel (23) begrenzten Ebene (24) mit einem Abstand h₁ beabstandet ist, der so definiert ist, dass durch ihn die auf die Abgabefläche (4) abzugebende Menge an biologischer Flüssigkeit festgelegt wird.

3. Vorrichtung zum Präparieren einer Schicht biologischer Zellen (10) nach einem der vorhergehenden Ansprüche, **dadurch gekennzeichnet, dass** die Form der zweiten Kante (26) so ausgebildet ist, dass sie an das Profil der Abgabefläche (4) angepasst ist.

4. Vorrichtung zum Präparieren einer Schicht biologischer Zellen (10) nach einem der vorhergehenden Ansprüche, **dadurch gekennzeichnet, dass** der Körper (11) eine Auflagefläche (13) umfasst, die zur Auflage auf einem Bereich (7) des Stopfens des Behälterdeckels (6) vorgesehen ist.

5. Vorrichtung zum Präparieren einer Schicht biologischer Zellen (10) nach einem der vorhergehenden Ansprüche, **dadurch gekennzeichnet, dass** die Eintrittsspitze (12) ein zum Durchstechen des Stopfens (6) des Behälters vorgesehenes abgeschrägtes Ende aufweist.

6. Vorrichtung zum Präparieren einer Schicht biologischer Zellen (10) nach einem der vorhergehenden Ansprüche, **dadurch gekennzeichnet, dass** die Abstützmittel (23) und das Verteilungsmittel (20) bezüglich der Abgabespitze (15) derart angeordnet sind, dass jeglicher Kontakt mit dem Tropfen Flüssigkeit (3) vermieden wird, wenn dieser durch die Verteilungsspitze (15) auf die Abgabefläche (4) abgegeben wird.

7. Vorrichtung zum automatischen Präparieren (100) einer Schicht biologischer Zellen unter Verwendung der Vorrichtung zum Präparieren (10) nach einem der Ansprüche 1 bis 6, **dadurch gekennzeichnet, dass** die Vorrichtung Folgendes umfasst:
- eine Trägereinheit (102), die zur Aufnahme eines eine Abgabefläche (4) umfassenden Objektträgers (1) vorgesehen ist;
- eine Präpariereinheit (110), die Mittel zum derartigen Betreiben der Vorrichtung zum Präparieren (10) umfasst, dass ein Tropfen biologischer Flüssigkeit aus einem eine biologische Flüssigkeit (2) enthaltenden Behälter entnommen wird und dieser Tropfen kontrolliert derart verteilt wird, dass eine dünne Schicht biologischer Zellen erstellt wird;
- Mittel zum Prüfen des Vorhandenseins des Tropfens biologischer Flüssigkeit auf der Abgabefläche (4) und
- Mittel zum Herausziehen der Verteilungsvorrichtung.

8. Vorrichtung zum automatischen Präparieren (100) einer Schicht biologischer Zellen nach Anspruch 7, **dadurch gekennzeichnet, dass** die Präpariereinheit (110) einen zur Aufnahme des Behälters (2) vorgesehenen Befestigungsträger (104) umfasst, wobei der Befestigungsträger (104) einerseits in einer vertikalen Richtung Z bewegbar ist und andererseits von einer um eine Achse (112) drehbar gelagerten Platte (107) getragen wird.

9. Vorrichtung zum automatischen Präparieren (100) einer Schicht biologischer Zellen nach Anspruch 6 oder 7, **dadurch gekennzeichnet, dass** die Mittel zum Prüfen des Vorhandenseins des Blutstropfens einen Lichtsender und einen Lichtempfänger umfassen.

10. Vorrichtung zum automatischen Präparieren (100) einer Schicht biologischer Zellen nach einem der Ansprüche 6 bis 9, **dadurch gekennzeichnet, dass** sie eine Öffnung (106) umfasst, um das Einsetzen der Vorrichtung (10) zu ermöglichen.

11. Vorrichtung zum automatischen Präparieren (100) einer Schicht biologischer Zellen nach einem der Ansprüche 6 bis 10, **dadurch gekennzeichnet, dass** sie Mittel zur Translationsbewegung in einer horizontalen Richtung umfasst, um die Trägereinheit (102) zwischen einer Einlege- oder Entnahmeposition des Objektträgers (1) und einer Position, in der der Objektträger in der Präpariereinheit (110) platziert ist, zu bewegen.

12. Verfahren zum Präparieren einer Schicht biologischer Zellen, insbesondere Blutzellen, unter Verwendung einer Vorrichtung zum Präparieren (100) nach den Ansprüchen 7 bis 11, **dadurch gekennzeichnet, dass** das Verfahren die folgenden Schritte umfasst:
- Platzieren eines Objektträgers (1) in die Trägereinheit (102), wobei der Objektträger eine nach oben weisende Abgabefläche (4) umfasst;
- Befestigen eines eine biologische Flüssigkeit (2) enthaltenden Behälters an dem Befestigungsträger (104), wobei der Stopfen (6) des Behälters nach oben weist;
- Platzieren der Vorrichtung zum Präparieren (10) in die Öffnung (106), wobei die Eintrittsspitze (12) zum Stopfen (6) weist;
- vertikales Bewegen des Behälters (2) in Richtung der Vorrichtung zum Präparieren (10), um die Eintrittsspitze (12) in den Behälter (2) einzuführen;
- Platzieren des Behälters (2) und der Vorrichtung zum Präparieren (10), sodass die Abgabespitze (15) zur Abgabefläche (4) des Objektträgers weist;
- vertikales Bewegen des Behälters (2) in Richtung der Abgabefläche (4) des Objektträgers (1), sodass die Abstützmittel (23) an der Abgabefläche (4) zum Aufliegen gebracht werden und der Stopfen (6) gegen die Auflagefläche (13) gedrückt wird, wodurch das Innere des Behälters (2) derart zusammengedrückt wird, dass in Höhe der Abscheidespitze (15) ein Tropfen (3) biologischer Flüssigkeit herausgedrückt und von der Abgabespitze (15) unter Einwirkung der Oberflächenspannung losgelöst und auf die Abgabefläche (4) abgegeben wird;
- Bewegen des Objektträgers in horizontaler Richtung, um eine Relativbewegung zwischen dem Verteilungsmittel (20) und der Abgabefläche (4) hervorzurufen, sodass der Tropfen biologischer Flüssigkeit auf kontrollierte Weise verteilt wird, um eine dünne Schicht biologischer Zellen zu erstellen.

13. Verfahren zum Präparieren einer Schicht biologischer Zellen nach Anspruch 12, **dadurch gekennzeichnet, dass** das Verfahren einen zusätzlichen Schritt zum Detektieren des Vorhandenseins des Tropfens biologischer Flüssigkeit durch Mittel zum Prüfen des Vorhandenseins, bevor der Objektträger zum Verteilen des Tropfens bewegt wird, umfasst.

14. Verfahren zum Präparieren einer Schicht biologischer Zellen nach Anspruch 12 oder 13, **dadurch gekennzeichnet, dass** das Verfahren einen zusätzlichen Schritt zum Schütteln des Behälters (2), um die biologische Flüssigkeit vor der Abgabe des Tropfens (3) auf der Abgabefläche (4) des Objektträgers zu homogenisieren, umfasst.

## Claims

1. A device for preparing a layer of biological cells (10) on a deposition surface (4) of a slide (1), said device comprising a body (11) provided with a channel (14), said body comprising a first end (18) forming an entry tip (12) intended to enter inside a container (2) containing a biological liquid (5), closed by a stopper (6) and a second end (17) forming a depositing tip (15) intended to deposit a drop of said biological liquid (3) onto the deposition surface (4), said second end (17) comprising support means (23) intended to come to rest against the deposition surface (4) and a spreading means (20) to spread the drop of liquid to form the layer of biological cells, said spreading means (20) comprising a blade (22) arranged in a plane (28) forming an angle of inclination α with a plane (24) of the deposition surface (4) and elastic return means (21) that are interposed between said blade and said second end (17), **characterized in that** said spreading means (20) comprises a blade (22) having a substantially rectangular shape, said blade comprising a first edge (27) connected to the second end (17) by the elastic return means (21) and a second edge (26) which protrudes beyond a plane (24) delimited by the support means (23) by a distance h₂, the distance h₂ and the elastic return means (21) working together so as to ensure a controlled spreading of the drop of biological liquid to form the layer of biological cells and **in that** said support means (23) comprise a skirt partially surrounding the depositing tip (15) and provided with a window (16).

2. The device for preparing a layer of biological cells (10) according to claim 1, **characterized in that** said depositing tip (15) is spaced from a plane (24) delimited by the support means (23) by a distance h₁ defined so as to determine the quantity of biological liquid to be deposited on the deposition surface (4).

3. The device for preparing a layer of biological cells (10) according to any one of the preceding claims, **characterized in that** the shape of the second edge (26) is configured to be adapted to the profile of the deposition surface (4).

4. The device for preparing a layer of biological cells (10) according to any one of the preceding claims, **characterized in that** the body (11) comprises a support surface (13) intended to come to rest against a zone (7) of the container stopper (6).

5. The device for preparing a layer of biological cells (10) according to any one of the preceding claims, **characterized in that** the entry tip (12) has a beveled end intended to pierce the stopper (6) of said container.

6. The device for preparing a layer of biological cells (10) according to any one of the preceding claims, **characterized in that** said support means (23) and the spreading means (20) are arranged with respect to the depositing tip (15) so as to avoid any contact with the drop of liquid (3) when it is deposited by the distribution tip (15) on the deposition surface (4).

7. An apparatus (100) for automatically preparing a layer of biological cells using the preparation device (10) defined according to any one of claims 1 to 6, **characterized in that** said apparatus comprises:
- a support unit (102) intended to receive a slide (1) comprising a deposition surface (4);
- a preparation unit (110) comprising means for implementing the preparation device (10) to collect a drop of biological liquid from a container containing a biological liquid (2) and to spread said drop in a controlled manner to produce a thin layer of biological cells;
- means for checking for the presence of the drop of biological liquid on the deposition surface (4) and
- extraction means of the distribution device.

8. The apparatus (100) for automatically preparing a layer of biological cells according to claim 7, **characterized in that** the preparation unit (110) comprises a mounting support (104) for receiving the container (2), said mounting support (104) being on the one hand movable in a vertical direction Z and on the other hand carried by a plate (107) rotatably mounted about an axis (112).

9. The apparatus (100) for automatically preparing a layer of biological cells according to claim 6 or claim 7, **characterized in that** the means for checking for the presence of the drop of blood comprise a light emitter and a light receiver.

10. The apparatus (100) for automatically preparing a layer of biological cells according to any one of claims 6 to 9, **characterized in that** it comprises an opening (106) to allow the introduction of the device (10).

11. The apparatus (100) for automatically preparing a layer of biological cells according to any one of claims 6 to 10, **characterized in that** it comprises means for translational movement in a horizontal direction to move the support unit (102) between a position for placing or removing the slide (1) and a position in which the slide is placed in the preparation unit (110).

12. A process for preparing a layer of biological cells, in particular blood cells, using a preparation apparatus (100) defined according to claims 7 to 11, **characterized in that** said process comprises the following steps:
- placing a slide (1) on the support unit (102), said slide comprising an upwardly facing deposition surface (4);
- attaching a container containing a biological fluid (2) on the mounting support (104) with the stopper (6) of the container facing upward;
- placing the preparation device (10) in the opening (106) with the entry tip (12) directed toward the stopper (6);
- moving said container (2) vertically toward the preparation device (10) in order to insert the entry tip (12) into the container (2);
- positioning said container (2) and said preparation device (10) so that the depositing tip (15) is oriented towards the deposition surface (4) of the slide;
- moving said container (2) vertically in the direction of the deposition surface (4) of the slide (1) so as to bring the support means (23) into contact against the deposition surface (4) and to apply the stopper (6) against the support surface (13), thus compressing the interior of the container (2) in order to release a drop (3) of biological liquid at the depositing tip (15), said drop being separated from the depositing tip (15) by the effect of surface tension and deposited on the deposition surface (4);
- moving the slide in a horizontal direction to achieve a relative movement between the spreading means (20) and the deposition surface (4) in order to spread the drop of biological liquid in a controlled manner to produce a thin layer of biological cells.

13. The process for preparing a layer of biological cells according to claim 12, **characterized in that** the process comprises an additional step aimed at detecting the presence of the drop of biological liquid by means of the presence checking means before moving the slide to spread the drop.

14. The process for preparing a layer of biological cells according to claim 12 or claim 13, **characterized in that** the process comprises an additional step aimed at agitating the container (2) to homogenize the biological liquid before depositing the drop (3) onto the deposition surface (4) of the slide.
